# EUROPEAN PATENT APPLICATION

(11) **EP 4 510 499 A1**
(43) Date of publication of application: **19.02.2025**
(21) Application number: 23788041.4
(22) Date of filing: 24.02.2023
(51) Int. Cl.: H04L 9/32, G06F 21/33, G06F 21/60, G06F 21/64, H04L 9/10

(54) **REMOTE SIGNATURE SYSTEM AND TAMPER RESISTANT DEVICE**

(30) Priority: 13.04.2022 JP 2022066604; 10.11.2022 JP 2022180512
(71) Applicant: Key Technologies Co., Ltd., Yokohama-shi, Kanagawa 225-0016 (JP)
(72) Inventor: KIDO Keisuke, Yokohama-shi Kanagawa 225-0016 (JP)
(74) Representative: Müller-Boré & Partner Patentanwälte PartG mbB
(86) International application number: PCT/JP2023/006810
(87) International publication number: WO 2023/199619

(57) **Abstract**

The present invention realizes a remote signature system in which identity verification is performed for each signing request by combining the remote signature system with public key cryptography. A terminal device (2) comprises a means for generating a key pair for authentication to perform the public key cryptography. A generated secret key is stored in the terminal device (2), and a generated public key is transmitted to the tamper resistant device (5) and is stored in relation with the corresponding signature key. The tamper resistant device comprises a signature key storage means (12) for storing the signature key, a decryption key and signature key identification information as pairs for each user. When requesting a digital signing, a signing request including the signature key identification information, plaintext verification information, and a crypto token including the encrypted verification information and the encrypted signature object data is created and is transmitted to the tamper resistant device (5). The tamper resistant device accesses to the signature key storage means (12) and searches both the decryption key and the signature key. The tamper resistant device decrypts the crypto token using the searched decryption key, and verifies consistency between the decrypted verification information and the plaintext verification information. If they do not match each other, the signing request is excluded from the digital signing.

## Description

### Technical Field

The present invention relates to a remote signature system for digitally signing signature object data generated from an electronic document using a signature key managed by a tamper resistant device.

The present invention relates to a tamper resistant device which is used in the remote signature system.

### Background Art

The remote signing system in which a user's signature key is installed on an enterpriser's server and the user logs in to the server remotely and digital signing is performed on the enterpriser's server using his/her own signature key has been proposed. According to the remote signature system, the digital signing can be performed remotely and the user does not need to manage his/her own signature key, and so this system is expected as a signature system with high convenience.

As an electronic signature system of a remote signing type, the electronic signature system comprising a key management system for controlling the signature key, a certificate issuing system for generating a digital certificate, and terminal devices through which users operate has been proposed (for example, see PLT 1). In this known electronic signature system, user authentication is performed using a combination of a user ID and a password on the basis of a user's account set up on the key management system.

Further, the electronic signature system of the remote signing type has also been proposed from the applicant (for example, see PLT 2). In this electronic signature system, a tamper resistant device generates a key pair of a secret key and a public key in response to the user's request. The secret key becomes the signature key and is stored in the tamper resistant device. The public key is transmitted to the terminal device and is stored as an encryption key. Subsequently, the user assumes authentication information, such as a password, that indicates his/her authority to use his/her signature key and transmits it to the tamper resistant device through the terminal device. The tamper resistance device stores the received user's authentication information in relation with his/her signature key. This authentication information acts as reference information used in the identity verification processing. The user's authentication information is memorized in the user's brain and is maintained in a state of secret. Furthermore, the secret key functions as a decryption key for decrypting the crypto token encrypted using the public key.

When performing the digital signing, the user inputs his/her own authentication information into the terminal device. The terminal device encrypts the inputted authentication information using the encryption key to generate the crypto token including the encrypted authentication information. Subsequently, a signing request including the signature object data to be signed, the crypto token and signature key identification information is generated and is transmitted to the tamper resistance device. The tamper resistant device decrypts the crypto token using the decryption key. The decrypted authentication information is verified for matching with the authentication information which is stored with the signature key, and the digital signing is allowed only when the correct authentication information is inputted. As the result of this, a remote signature system in which only the person who have the legitimate use authority can digitally sign will be built.
PLT1: Japanese Patent Publication (B) No. 6465426
PLT2: Japanese Patent Publication (A) No. 2021-111925

### Summary of Invention

### Technical Problem

In the electronic signature system, it is necessary to send the signing request including the signature object data subject to the digital signing to the tamper resistant device safely. However, in the signature system in which the identity authentication is performed using the user ID and the password, the signature object data is not encrypted and is sent to the tamper resistant device in plaintext. For this reason, there was a risk of the signature object data being tampered at network relay points, and thus there was a security issue.

On the contrary, according to the electronic signature system in which the identity authentication is performed using the authentication information, both the authentication information and the signature object data are transmitted to the tamper resistant device in encrypted state. Therefore, the risk of the signature object data being tampered with is avoided. Besides, the verification processing of the identity authentication is performed and only the owner of the signature key who knows the authentication information can digitally sign, and therefore a high security level can be ensured. However, since the authentication information is retained in the user's brain secretly, a trouble that the signature system cannot be used may be occurred if the user forgets the authentication information. In this case, when the authentication information is constructed by a simple password, there is a risk of easy theft by hackers. If the authentication information is stolen, scandals that a person without the use authority digitally signs is caused. However, in order to prevent the theft of the authentication information, using a complex password could be supposed. But, in this case, the authentication information is easy to be forgotten, and thus there is a risk that the user can't use the signature system if the user forgets his own authentication information. As described, in the remote signature system described in he cited document 2, there was a drawback that the burden on users regarding the authentication information (password) management was excessive.

Further, as the identity authentication method, the method using challenge codes is known. In this verification method, the tamper resistant device transmits the challenge code to the terminal device. The terminal device encrypts the received challenge code using the encryption key and sends it back to the tamper resistant device. The tamper resistant device decrypts the encrypted challenge code using the decryption key and verifies the matching with the criteria challenge code stored in the tamper resistant device. If they match each other, the signature key is activated and the digital signing is performed. However, in this verification method, the verification step and the signing step are separated each other, and thus there is a drawback that the verification step is not performed for each signing request. In addition, the number of the processing steps of the verification step and the signing step is excessive, and thus an issue that the processing steps are complicated is pointed out. More importantly, although the identity verification is performed, whether or not tampering has been performed is not verified. So that, there was a risk that the digital signing is performed on the illegal signing request.

The object of the present invention is to realize a remote signature system in which the identity verification is performed for each signing request and the identity verification is performed without using the authentication information such as the password.

Another object of the invention is to realize a remote signature system in which the verification step and the signing step can be executed sequentially without using the challenge code.

Further, the object of the invention is to realize the remote signature system in which the tampered and fraudulent signature requests are effectively excluded from being digitally signed.

### Solution to Problem

The remote signature system according to the invention comprising a signing system which includes one or more than one tamper resistant devices configured to generate and manage signature keys and a key management server for controlling a tamper resistant device of the one and more than one tamper resistant device, and terminal devices through which users or signers operate, wherein signature object data generated from an electronic document is digitally signed using the signature key, and wherein
said terminal device comprises a means for generating a key pair for authentication comprising a secret key and a public key or a means for installing the key pair for authentication which is generated externally, and a means for encrypting verification information used for identity verification and the signature object data subject to the digital signing using the secret key as an encryption key to generate a crypto token, and wherein
said tamper resistant device comprises a means for generating the signature key, a means for storing the generated signature key, a means for storing the public key of the key pair for authentication generated in the terminal device as a decryption key, a signature key storage means for storing signature key information including the signature key, the decryption key and signature key identification information for each user, a means for accessing to the signature key storage means to search both of the decryption key and the signature key specified by the signature key identification information, a means for decrypting the encrypted verification information and the encrypted signature object data using the searched decryption key, a verification means for verifying validity of a signing request using the decrypted verification information, and a means for digitally signing the signature object data using the searched signature key, and wherein
the secret key of the key pair for authentication is stored in the terminal device as the encryption key, and the public key of the key pair is transmitted to the tamper resistant device and is stored in the signature key storage means as the decryption key, and wherein
when digitally signing, the terminal device encrypts the signature object data and the verification information using the encryption key to generate a crypto token, and wherein
the signing request including the signature key identification information, the plaintext verification information before being encrypted, and the crypto token including the encrypted verification information and the encrypted signature object data is created and is transmitted to the tamper resistant device, and wherein
the tamper resistant device searches both the decryption key and the signature key together using the signature key identification information included in the signing request, decrypts the crypto token using the searched decryption key, verifies consistency between the decrypted verification information and the plaintext verification information, and digitally signs the decrypted signature object data using the searched signature key, if the decrypted verification information and the plaintext verification information match each other.

The basic conception of the present invention is combining the remote signature system with public key cryptography to control the signature key by use of the verification result of the identity authentication based on the public key cryptography. As a result of the inventor's various analyses with respect to the public key cryptography and the remote signature systems, it was found that the signature key could be controlled using the verification result of the public key cryptography by adopting the following three configurations.
(1) Installing in the tamper resistant device a signature key storage means in which the signature key information including the signature key which is used to digitally sign, the decryption key which is used to decrypt the encrypted information and the signature key identification information specifying both the signature key and the decryption key is stored for each user.
(2) When digitally signing, the signing request which includes both information required for the digital signing and information required for the verification process of the identity authentication is generated and is transmitted to the tamper resistant device.
(3) The signature object data subject to the digital signing and the verification information used for the identity authentication are encrypted using the same encryption key and are transmitted to the tamper resistant device.

The information required for the digital signing includes the signature key identification information identifying the signature key, and the signature object data subject to the digital signing. And, the information required for the verification process of the identity authentication includes the encrypted verification information which is generated by encrypting the verification information used for the identity authentication and the plaintext verification information before being encrypted.

The verification information functions as reference information used in the verification process of the identity authentication and functions similarly to the challenge code. There are no special restrictions on this verification information, and the arbitrary code information or message information which is created by the user can be used. The signature object data and the signature key identification information can be used as the verification information, respectively. Alternatively, various information such as arbitrary sequence or string generated by the terminal device can be used. This verification information is generated by the terminal device or is entered into the terminal device by the user.

According to the invention, the signature object data subject to the digital signing is encrypted and transmitted to the tamper resistant device in terms of the tamper prevention. The verification information used for the identity authentication is also encrypted using the same encryption key. By encrypting using the same encryption key, both the verification information and the signature object data are reproduced by use of the same decryption key with a single decryption process in the tamper resistant device.

The setup process will be described. The tamper resistant device generates the signature key for each user based on the request from the user. The generated signature key is stored in the tamper resistance device with the signature key identification information. The signature key identification information is transmitted to the terminal device and is stored therein. The terminal device generates a key pair for authentication used for executing the public key cryptography. The generated secret key is stored in the terminal device. The generated public key is transmitted to the tamper resistance device and is stored in relation with the corresponding user's signature key. The secret key stored in the terminal device functions as the encryption key for encrypting the verification information and the signature object data, and the public key stored in the tamper resistant device functions as the decryption key for decrypting the encrypted verification information and the encrypted signature object data. Therefore, the terminal device retains the encryption key and the tamper resistant device retains the decryption key.

Further, the signature key information including the signature key used for the digital signing, the decryption key for decrypting the encrypted information and the signature key identification information for identifying both the signature key and the decryption key is stored in the signature key storage means for each user. The signature key identification information acts as identification information or search information for identifying a combination or pair of the signature key and the decryption key. By using this configuration, the signature key and the decryption key which are set for each user are searched together. The combining with the signature key and decryption key being retrieved together and the signature object data and the verification information being encrypted using the same encryption key, the digital signing can be performed consecutively to the decryption and verification processes. The setup step is completed by storing the signature key information in the signature key storage means.

Next, the signing request for requesting the tamper resistant device the digital signing will be described. According to the invention, in order to perform the verification process and the digital signing process sequentially, the signing request includes the information required for the identity authentication and the information required for the digital signing. The information required for the identity authentication includes the encrypted verification information and the plaintext verification information before encryption. The information required for the digital signing includes the signature key identification information for specifying the user's signature key and the signature object data subject to the digital signing. According to the invention, these information are effectively combined to generate the signing request.

The verification information is encrypted at the terminal device and is included in the signing request together with the plaintext verification information which is before encryption, and is transmitted to the tamper resistant device. In the tamper resistant device, the encrypted verification information is decrypted using the decryption key, and the identity verification is performed by verifying the consistency between the decrypted verification information and the plaintext verification information. That is, the verification information in plaintext is the criteria information before encryption, and thus the plaintext verification information is reproduced by decrypting the encrypted verification information using the decryption key corresponding to the encryption key. Therefore, the crypto token is decrypted using the decryption key specified by the signature identification information, and the matching between the decrypted verification information and the plaintext verification information is verified. If they match each other, it is judged that the encrypted verification information is encrypted using the encryption key corresponding to the decryption key stored in the tamper resistant device. As a result of this, the signing request is determined to be a signing request by an authorized person.

The signature object data is transmitted in encrypted form from the viewpoint of tamper prevention. At this time, the signature object data and the verification information are encrypted using the same encryption key. And, the signature key identification information is transmitted in plaintext. The information required for the verification is the encrypted verification information and the plaintext verification information before encryption. As the signing request, the signing request of the form shown below is assumed. Signature Request = plaintext (signature key identification information) +plaintext (verification information)+crypto token (encrypted verification information+ encrypted signature object data)

When digitally signing, the terminal device performs a hash operation for the electronic document to be signed to generate the signature object data. Subsequently, the terminal device encrypts the generated signature object data and the verification information to generate the crypto token. The crypto token comprises a preset format structure. Then, the terminal device generates the signing request including the signature key identification information, the plaintext verification information, the crypto token including the encrypted signature object data and the encrypted verification information, and sends it to the tamper resistant device. Thereby, the signature object data is transmitted to the tamper resistant device securely. Therefore, the signature object data cannot be tampered with during transmission.

When the tamper resistant device receives the signing request, the search means starts to operate. The search means accesses to the signature key storage means to extract both the decryption key and the signature key associated with the signature key identification information included in the signing request. Subsequently, the crypto token is decrypted using the searched decryption key to decrypt the verification information and the signature object data, respectively. Next, the consistency between the decrypted verification information and the plaintext verification information is verified. If they match each other, the decrypted signature object data is digitally signed using the searched signature key.

According to the invention, since both the decryption key and the signature key are extracted by a single search operation, the signing process can be executed continuously after the decryption process and verification process are completed. Furthermore, in the beginning, the decryption key is searched, the verification information included in the cryptographic token is decrypted using the searched decryption key to perform the verification, and the verification result is checked. Thereafter, it is also possible that the signature key is searched and the signature object data is digitally signing using the retrieved signing key.

If as the verification result, the decoded verification information does not match the plaintext verification information, the validity of the signing request is denied. That is, since the crypto token is encrypted, the crypto token is not tampered with during transmission. Therefore, as the cause of the discrepancy, it is presumed that the verification information is encrypted using the encryption key which does not correspond to the decryption key retained in the tamper resistant device. Such a signing request is determined to be a signing request by a person without the use authorization. Therefore, if the decrypted verification information does not correspond to the plaintext verification information, such a signing request is determined to be invalid and is excluded from the digital signing.

Next, the processing performed when the signing request is tampered with will be explained. The signing request includes the signature key identification information in plaintext, the plaintext verification information and the crypto token. The crypto token is never tampered with, because it is encrypted. What can be tampered with is the plaintext signature key identification information and the plaintext verification information. Here, if the signature key identification information is tampered with, the signature key different from the authorized signature key is searched, and the decryption key which does not correspond to the encryption key used for encrypting the crypto token is searched. As the result of this, the decryption process is performed using the decryption key different from the authorized decryption key and thus the original verification information cannot be reproduced. Therefore, in the verification processing, the decrypted verification information does not match the plaintext verification information, and the signing request is processed as an error. Further, if the plaintext verification information is tampered with, the decrypted verification information and the plaintext verification information do not match each other, and thus the signing request is processed as an error. **In** this way, according to the invention, since the signing request is processed as an error if it is tampered, the tampered signing request is excluded from the digital signing. Therefore, according to the invention, the validity of the signing request is judged from the viewpoint of not only the use authority but also the tampering.

An example in which the signature object data is used as the verification information will be explained. When the signature object data is used as the verification information, the encrypted verification information and the encrypted signature object data are equal to each other, and so the signing request is formed as follows. Signing Request = signature key identification information + plaintext (signature object data) + crypto token (encrypted signature object data)

When the signing request is entered into the tamper resistant device, the following processes are carried out. Firstly, both the signature key and the decryption key which are specified by the signature key identification information included in the signing request are searched. The crypto token is decrypted using the searched decryption key, and the encrypted signature object data is decrypted. Consequently, the consistency between the decrypted signature object data and the plaintext signature object data is verified. If they match each other, the signature object data is digitally signed using the extracted signature key. Here, the plaintext signature object data can be digitally signed, or the decrypted signature object data can be digitally signed.

The verification according to the invention has significance in verifying authenticity of the crypto token. Further, the signature object data is transmitted in encrypted form and is sent safely without being tampered with. And so, the decrypted signature object data has important significance as authentic information. Digitally signing the decrypted signature object data rather than the plaintext signature object data achieves an advantageous effect in ensuring the security of the system.

In the present example, the consistency between the decrypted signature object data and the plaintext signature object data is verified. Therefore, in addition to the identity authentication, the presence of the tampering with the signature object data is also verified, and the signing request is processed as an error if the signature object data is tampered with.

Next, an example in which the signature key identification information is used as the verification information will be explained. In this case, the signature key identification information and the plaintext verification information are equal to each other, and thus the signing request is configured as follows. Signing Request = plaintext (signature key identification information) +crypto token (encrypted signature key identification information +encrypted signature object data)

In the tamper resistant device, the decryption key and the signature key are searched using the signature key identification information. Consequently, the crypto token is decrypted using the searched decryption key, and the consistency between the decrypted signature key identification information and the plaintext signature key identification information is verified. If they match each other, the decrypted signature object data is digitally signed using the searched signature key.

In this example, in addition to the identity verification, the verification whether the signature key identification information is tampered with or not is performed. That is, if the signature key identification information is tampered during the transmission of the signing request, the crypto token will be decrypted using a wrong decryption key which does not correspond to the encryption key, and thus the decrypted signature identification information and the plaintext signature key identification information do not match each other. As a result, the signing request in which the signature key identification information is tampered with is excluded from the digital signing.

An example in which the signature object data and the signature key identification information are used as the verification information will be explained. The signing request is configured as follows. The terminal device generates data information in which the signature identification information and the signature object data are concatenated each other and can be extracted individually. The data information = signature key identification information + signature object data Signing Request = plaintext (data information) + crypto token (encrypted data information)

**In** this example, the signature identification information is extracted from the data information, and the decryption key and the signature key are searched using the extracted signature key identification information. Consequently, the crypto token is decrypted using the searched decryption key, and the consistency between the decrypted data information and the plaintext data information. If they match, the signature object data is extracted from the data information, and the decrypted signature object data is digitally signed using the searched signature key.

In this example, in addition to the identity verification, the verification whether the signature key identification information or the signature object data is tampered with or not is performed. For example, if at least one of the signature key identification information or the signature object data is tampered, the decrypted data information and the plaintext data information do not match each other, and said signing request is determined to be invalid and is excluded from the digital signing.

In the remote signature system according to the invention, an arbitrary code sequence which is conceived by the user can be used as the verification information. In this case, the signing request is configured as follows. Signing Request = signature key identification information + plaintext (verification information) + crypto token (encrypted verification information + encrypted signature object data)

In this example, the matching between the decrypted verification information and the plaintext verification information is verified, and the decrypted signature object data is digitally signed if they match each other.

In this example, the arbitrary code sequence conceived by the user when performing the setup process can be used as the verification information. Alternatively, the arbitrary code sequence conceived by the user when forming the signing request can be used as the verification information. Further, the code sequence used as the verification information can be changed for each signing request. In this case, when generating the signing request, the user enters the verification information into the terminal device via an input means such as a keyboard.

According to the invention, as the information required for the identity verification, the verification information written in plaintext before encryption and the encrypted verification information are used. Further, no special restrictions are imposed on the content of the verification information, and the arbitrary information generated in the terminal device is used. Therefore, according to the invention, since the challenge code which is generated by the tamper resistant device and is transmitted to the terminal device is not used, the complexity of the verification process is eliminated. Furthermore, according to the invention, the validity of the signing request is checked by simply comparing the plaintext verification and the encrypted verification information with each other, and thus the user is not required to memorize the password or the authentication information. Therefore, according to the invention, the inconvenience that the signature system cannot be used due to forgetting the password can be solved. Further, since the signature object data is transmitted encrypted to the tamper resistant device, the signature object data is never tampered with.

Further, according to the invention, the verification information used for the identity authentication and the signature object data subject to the digital signing are encrypted using the same encryption key. Therefore, both the verification information and the signature object data are reproduced by a single decryption process. As a result, an advantage in which the verification process and the digital signing process can be continuously carried out is achieved.

### Advantageous Effect of Invention

According to the invention, since the validity of the signing request is made sure without using the challenge code, the complexity in the identity verification processing can be eliminated.

Further, the signature key can be controlled using the verification result of the identity authentication based on the public key cryptography, because the signature key storage means in which the signature key information including the decryption key for decrypting the crypto token, the signature key for performing the digital signing and the signature identification information for specifying the signature key is stored for each user is provided in the tamper resistant device and the signing request includes the information required for the signing process and the information required for the verification process. As a result, the identity authentication is performed for each signing request, and an inappropriate signing request can be excluded from the digital signing.

Further, since the signature object data subject to the digital signing and the verification information used for the identity authentication are encrypted using the same encryption key, the information required for the verification and the information required for the digital signing are reproduced together. Thereby, the verification process and the signing process can be performed continuously.

The inconvenience that the signature system cannot be used due to forgetting the password can be solved, because no special restrictions are imposed on the verification information and the arbitrary information can be used as the verification information.

According to the invention, since the signing request is processed as an error if it is tampered with, illegal signing requests can be excluded from the digital signings, in addition to determining the authority to use the signature key.

### Brief Description of Drawings

[FIG. 1] is a view showing an overall configuration of the remote signature system according to the invention.
[FIG. 2] is a view showing an overview of the setup process and the signing process of the remote signature system of the invention.
[FIG. 3] is a view showing algorithm of the signature key generation step of the remote signature system according to the invention.
[FIG. 4] is a view showing algorithm of the signing step of the remote signature system according to the invention.
[FIG. 5] is a view showing a modified example of the setup step.
[FIG. 6] is a view showing an example of the terminal device.
[FIG. 7] is a view showing an example of the tamper resistant device.
[FIG. 8] is a view showing an example of the key management server.
[FIG. 9] is a block diagram showing an example of the edit server.
[FIG. 10] is a view showing a modified example of the remote signature system according to the invention.

### Embodiments of Invention

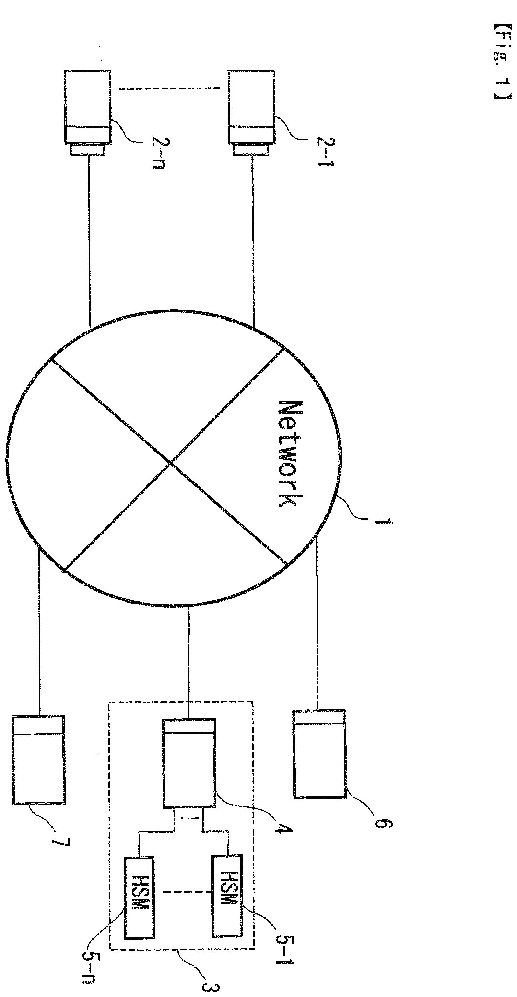

Fig. 1 is a diagram showing the overall configuration of the remote signature system according to the invention. To the network 1, there are connected terminal devices 2-1~ 2-n. These terminal devices are operated by the user or signer, and are personal computers or smartphones for example. In this regard, the concept of the user includes not only the signers digitally signing the electronic documents but also those who upload the electronic document to the edit server and those who download the electronic document from the external server to the edit server. Therefore, the conception of the terminal device of the invention includes not only the terminal device used by the signer but also those used for uploading the electronic document to be signed to the edit server.

To the network 1, a signing system 3 is connected. The signing system 3 comprises a key management server 4 and one or more tamper resistant devices 5 connected to the key management server. The key management server 4 is connected to the network and is configured to manage or control the tamper resistant device 5.

The tamper resistant device 5 is configured to safely generate and manage the signature key without leaking it to the outside and may be configured by a Hardware Security Module (HSM), for example. The tamper resistant device includes a subsystem or a device having a security managing function which is independent of the key management server. The tamper resistant device comprises a key management module which is a program for controlling the keys, and performs functions such as generation of the signature key, storage of the signature keys, decryption of the crypto token, verification of the decrypted signature object data, and digital signing using the signature key.

Furthermore, a certificate issuing server 6 provided in a certificate authority is connected to the network 1. The certificate issuing server 6 generates a certificate signing request (CSR) in response to a certification issuing request sent from the terminal device to create an electronic certificate. Furthermore, when generating the key pair that constitutes the signature key, a key pair generation request can be sent from the terminal device to the key management server by way of the certificate issuing server.

Further, to the network 1, an edit server 7 is connected. The edit server 7 comprises a function which manages the electronic documents to be signed, and manages the electronic documents to be signed which are uploaded from the terminal devices or downloaded from the external server, etc. When the electronic document is uploaded, the edit server 7 notifies the terminal device managed by the signer who should sign the electric document. Further, the edit server embeds an electronic signature generated by the signing system 3 into the edited electronic document to create a signed electronic document. The created electronic document is stored at the edit server 7.

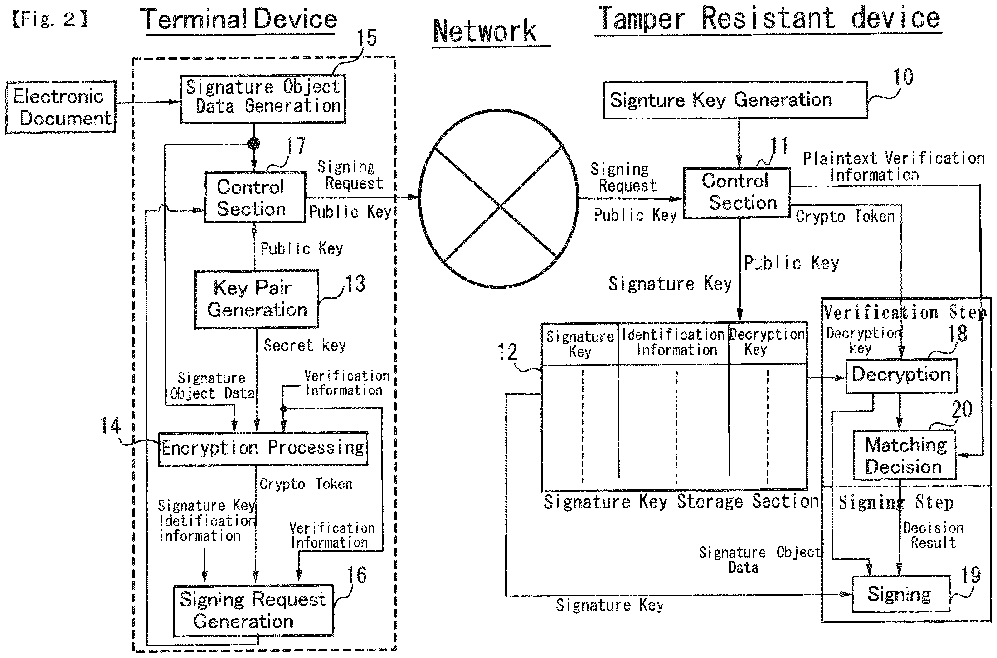

Fig. 2 shows the overview of the setup process and signing process of the remote signature system of the invention. The user who desires the setup requests the generation of the signature key to the tamper resistant device through the terminal device. In response to this request, the tamper resistant device generates the signature key using a signature key generation means 10. For example, the signature key generation means 10 generates a key pair of a secret key and a public key, and the generated secret key is used as the signature key and the public key is used as the signature key identification information. Of course, a user's name specifying the user or the number information specifying the terminal device can be used as the signature key identification information. The generated signature key is stored in a signature key storage section 12 together with the signature key identification information via control section 11. The signature key identification information is transmitted to the terminal device and is also stored therein.

The terminal device comprises a key pair generation means 13 and generates a key pair for authentication to perform the public key cryptography. The generated secret key of the key pair is sent to an encryption means 14 and functions as an encryption key for encrypting the signature object data and the verification information. The generated public key is transmitted to the tamper resistant device via the network and functions as a decryption key for decrypting the crypto token. Therefore, the public key is also called as the decryption key. This public key or the decryption key is stored in the signature key storage section 12 in relation with the user's signature key that was generated earlier. Therefore, as shown in Fig.2, signature key information including the signature key, the decryption key and the signature key identification information is stored in paired relation for each user. Here, the signature key identification information specifies both the signature key and the decryption key which are in a pair or pairwise relationship. Moreover, when the public key of the key pair for authentication is transmitted to the tamper resistant device, it can be encrypted using the public key paired with a signature key and sent to the tamper resistant device. In this case, the tamper resistant device uses the signature key as the decryption key and decrypts the encrypted public key using the signature key. The decrypted public key is stored in the signature storage section as the decryption key.

Since the terminal device holds the own signature key identification information, the terminal device is indirectly tied to its own decryption key and signature key which are stored in the tamper resistant device via the signature key identification information. That is, by providing the signature key storage means 12, both the decryption key for decrypting the crypto token and the signature key for performing the digital signing are assigned to each terminal device. Therefore, when a signing request including the signature key identification information is transmitted from the terminal device, both of the decryption key and the signature key which are specified by the signature identification information are searched, and the verification process and the signing process are performed using the searched decryption key and signature key. The setup operation is completed by setting the signature storage section 12.

Upon digitally signing, the user or signer specifies the electronic document to be signed. The subsequent signal processing is performed automatically. A signature object data generation means 15 of the terminal device performs a hash operation on the specified electronic document to generate the signature object data. The generated signature object data is transmitted to the encryption means 14. The encryption means 14 encrypts the signature object data and the verification information using the encryption key to create the crypto token. The generated crypto token is transmitted to a signing request generation means 16. In addition to the crypto token, the signature key identification information and the plaintext verification information are also supplied to the signing request generation means. The signing request generation means 16 generates the signing request shown below. Signing Request = signature key identification information + plaintext (verification information) + crypto token (encrypted verification information + encrypted signature object data)

The generated signing request is transmitted to the tamper resistant device via a control section 17.

No special restrictions are imposed on the verification information, and arbitrary information and code string which are conceived by the user can be used. For example, the signature object data and the signature key identification information can be used as the verification information. Further, arbitrary sequence and string which are conceived by the user can be used. Furthermore, the verification information can be changed for each signing request.

The hash operation is performed on basis information to calculate a hash value, and the obtained hash value can be used as the verification information. For example, when the signature key identification information is used as the verification information, signature key identification information may be difficult to use as is because of the large number of bytes. In such case, the verification information with small number of bytes can be used by forming the hash value of the signature key identification information.

When the tamper resistant device receives the signing request, a search means (not shown) operates and accesses to the signature key storage section 12 to search the decryption key and the signature key specified by the signature identification information. The searched decryption key is sent to a decryption means 18 and the signature key is sent to a signing means 19. Consequently, the crypto token is extracted from the signing request and is sent to the decryption means. The decryption means 18 decrypts the encrypted verification information and the encrypted signature object data. The decrypted verification information is sent to a matching decision means 20, and the decrypted signature object data is sent to the signing means 19. To the matching decision means 20, the plaintext verification information extracted from the signing request is also entered. The matching decision means 20 decides the consistency between the decrypted verification information and the plaintext verification information and sends the decision result to the signing means 19.

If the decrypted verification information and the plaintext verification information match each other, this signing request is decided to be valid, and the decrypted signature object data is digitally signed using the searched signature key. If they do not match, said signing request is processed as an error and is excluded from the digital signing.

In this way, according to the invention, since both the decryption key and the signature key are searched using the signature key identification information, and both the information used in the verification step and the information used in the signing step are transmitted to the tamper resistant device by means of the single signing request, the verification step and the signing step can be performed continuously and integrally. Further, after specifying the electronic document to be signed, no information inputting operations are performed by the user. Therefore, all the processing steps carried out after specifying the electronic document can be performed automatically. As a result, all the steps which are performed until the generation of the signed document are carried out automatically.

In the system configuration shown in Fig 2, when the signature object data is used as the verification information, it is configured that the signature object data outputted from the signature object data generation means 15 is supplied to the encryption means 14 and the signing request generation means 16, respectively. In this case, the verification information supply means is not used. Further, when both the signature object data and the signature key identification information are used as the verification information, it is configured that the signature object data outputted from the signature object data generation means is supplied to the encryption means 14 and the signing request generation means 16, respectively and that the signature key identification information is supplied to the encryption means 14 and the signing request generation means 16, respectively.

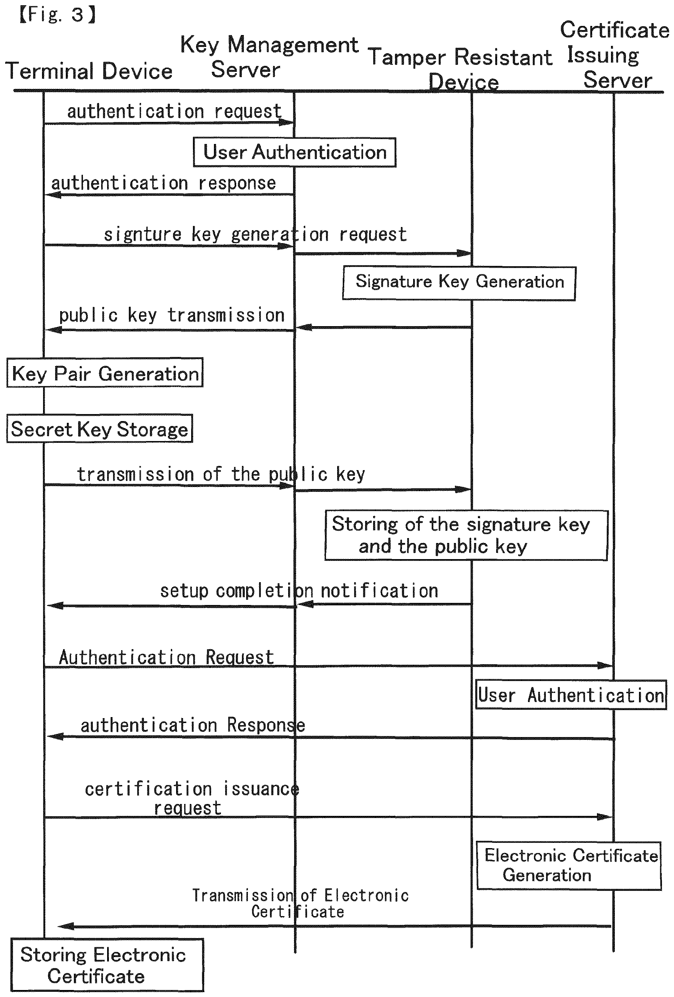

Fig. 3 is a view showing the algorithm of the signature key generation step in the remote signature system of the invention. The user sends an authentication request to the key management server 4 of the signing system 3 through the terminal device 2. The authentication request can be the user authentication using a user ID and a password. If a user's account has not been created, the key management server 4 will create a new account for the user. Furthermore, as the user authentication, the authentication processing can also be performed by sending a token stored in an IC card to the key management server besides the authentication method in which the combination of the user ID and the password is authenticated. After the user authentication, an authentication response is sent to the terminal device 2 from the key management server 4.

If the user authentication is successful, the user sends a signature key generation request from the terminal device to the key management server 4. The key management server 4 instructs the tamper resistant device 5 to generate the signature key. The tamper resistant device generates a key pair comprising a secret key acting as the signature key and a public key in response to the reception of the signature key generation request. The generated secret key is to be the signature key, is stored in the tamper resistant device, and is used for the digital signing. And, the public key is used as the signature key identification information. The tamper resistant device sends a signature key generation notification including the generated public key to the key management server, and the key management server sends it to the corresponding terminal device. The terminal device stores the received public key as the signature key identification information.

Upon receipt of the secret key generation notification, the terminal device generates a key pair of a secret key and a public key for performing the public key cryptography. The generated secret key is stored in the terminal device and functions as the encryption key for encrypting the signature object data and the verification information. As the encryption method, the signature object data can be encrypted by performing the signature operation for the signature object data using the secret key. The encrypted signature object data and the encrypted verification information form the crypto token. And also, the generated public key is transmitted to the tamper resistant device and is stored in relation to the corresponding signature key. This public key can be transmitted to the tamper resistant device encrypted using the public key which functions as the signature identification information. In this case, the encrypted public key is decrypted using the signature key.

The signature key information including the signature key for digitally signing, the decryption key for decrypting the crypto token, and the signature key identification information for specifying the signature key and the decryption key is stored in the signature key storage section 12 for each user. Moreover, when the amount of the key pairs to be stored is too much and they overflows, it is possible to encrypt a part of the key pairs and store them in a database outside the tamper resistant device.

As the signature key identification information, various information can be used in addition to the public key corresponding to the secret key acting as the signature key. For example, not only the identical information with the signature key identification information, but also information including additional modifications, i.e., identification information equivalent to the signature key identification information, can be used. The name of the user may be used as the signature key identification information, or the tamper-resistant device may assign an identification number to the user and the assigned identification number can be used as the signature key identification information.

When the storage of the public key that serves as the decryption key is completed, the tamper resistant device transmits a setup completion notification to the terminal device. Thereafter, the user can request the digitally sign using the terminal device.

Subsequently, in order to obtain a digital certificate (a certificate for signing), the user sends the authentication request to the certificate issuing server 6 through the terminal device. This user authentication is also the combination of the user ID and the password. The certificate issuing server sends an authentication response to the terminal device.

If the user authentication is successful, the terminal device sends a digital certificate issuance request including the user ID, the public key paired with the signature key and other necessary matters to the certificate issuing server. The certificate issuing server generates a certificate signing request (CSR) using the received public key and necessary information, and creates the digital certificate after performing the prescribed examination processes. The created digital certificate is sent to the terminal device. The terminal device stores the received digital certificate. Moreover, the digital certificate is sent to the edit server and is stored therein as well if necessary.

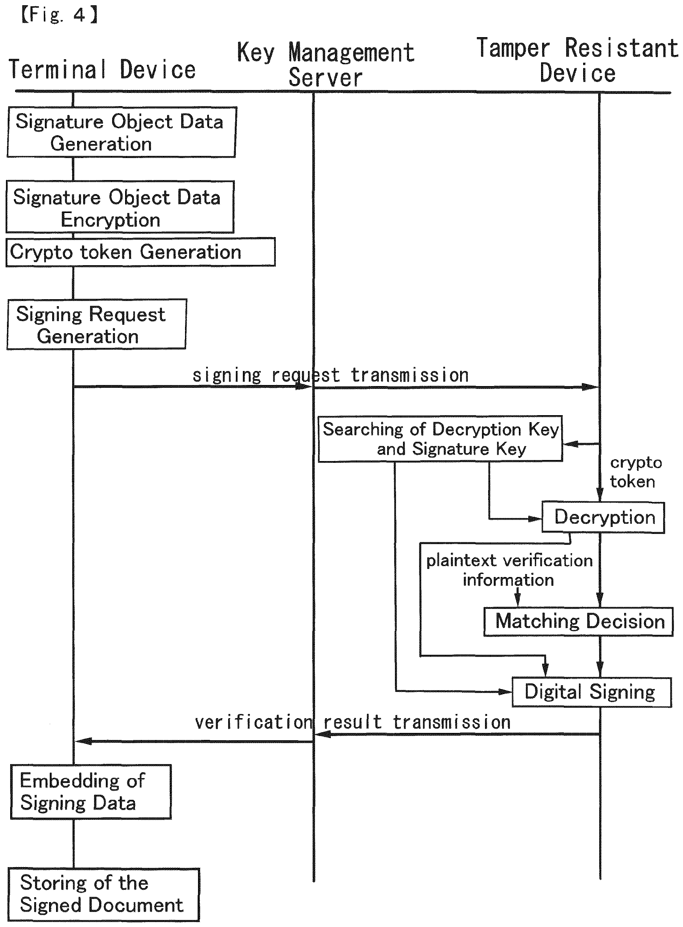

Fig. 4 shows the algorithm for performing the digital signing using the signature key. The terminal device generates the signature object data from the electronic document to be signed. As the electronic documents, the electronic document which is saved in the terminal device and those sent from the edit server for managing the electronic documents are used. The terminal device generates a hash value by performing a predetermined logical operation on an area to be signed of the electronic document, and the generated hatch value is used as the signature object data.

With respect to the signature object data, the signature object data according to the invention includes not only those directly produced from the electronic document but also the message in which additional information such as creation data or expiration data is added to the signature object data. Namely, the message including the signature object data in part can also be used as the signature object data.

Subsequently, the terminal device encrypts the signature object data and the verification information using the encryption key (the stored secret key) to generate the crypto token. As an example of the encryption, the signature object data and the verification information are concatenated, a signature operation is performed on the data including the concatenated signature object data and verification information, and the generated signature operation result is used as the crypto token. Alternatively, it is possible that the signature object data and the verification information are encrypted respectively to form the crypto token. Moreover, it is also possible that the hash operation is performed on the verification information and that the generated hash value is encrypted to form the crypto token.

Then, the terminal device generates the signing request including the signature key identification information, the plaintext verification information, and the crypto token including the encrypted verification and the encrypted signature object data. The signing request has significance for requesting the digital signing to the tamper resistant device. The signing request is transmitted to the tamper resistant device by way of the key management server. When the signature key identification information is used as the verification information, the plaintext verification information is unnecessary, and the signing request having the signature key identification information and the crypto token including the encrypted signature key identification information and the encrypted signature object data is generated.

When the tamper resistant device receives the signing request, the search means accesses to the signature key storage section and searches the signature key and decryption key related to the signature key identification information included in the signing request. The searched decryption key is sent to the decryption means and the searched signature key is sent to the signing means.

The decryption means decrypts the crypto token to form the plaintext verification information and the plaintext signature object data, respectively. The decrypted signature object data is sent to the signing means and the decrypted verification information is sent to the matching decision means. Consequently, the matching between the decrypted verification information and the plaintext verification information included in the signing request is verified. As an example of the verification, the signature operation is performed on the encrypted verification information using the decryption key to form a signature value. Then, the matching between the generated signature value and the plaintext verification information is verified. Moreover, when the signature key identification information is used as the verification information, the consistency between the plaintext signature key identification information and the decrypted signature key identification information is verified. Further, when the hash value of the signature key identification information is used to perform the verification, it is possible that the matching between the hash value formed from the plaintext signature key identification information and the decrypted hash value is verified.

As the verification result, the decrypted verification information and the plaintext verification information match each other, the tamper resistant device decides that the signing request is valid. That is, the tamper resistant device decides that the received signing request is produced by a person who has a legitimate use authority for the signature key and that the signature object data is not tampered with.

As the verification result, they do not match each other, the tamper resistant device determines that the received signing request is invalid and processes the signature request as an error.

When the signing request is decided to be valid, the tamper resistant device digitally signs the decrypted signature object data using the searched signature key to produce the electronic signature. The signature result including the electronic signature is transmitted to the terminal device by way of the key management server. The terminal device embeds the electronic signature into the edited electronic document to produce a signed electronic document (signed document). The generated electronic signature can be inserted with a signature time stamp from a time stamp server and can be embedded into the electronic document to guarantee a long term validity of the electronic signature. The signed electronic document is stored in the terminal device and is transmitted to the edit server, if necessary. Moreover, it is possible to transmit the generated electronic signature to the edit server and is processed therein.

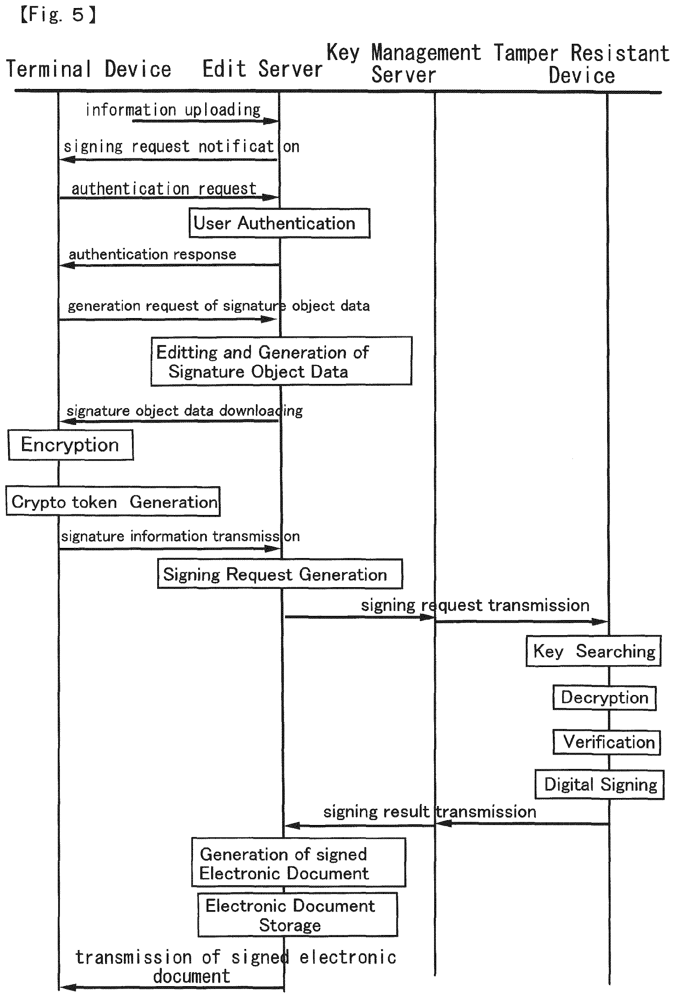

Fig.5 shows a modification of the setup process. In this example, the edit server manages the electronic documents. The edit server has a function as a management server for managing the uploaded electronic documents. To the edit server, the electronic documents to be signed are uploaded from the terminal devices. And, the electronic documents to be signed are entered from the external servers as well. The upload information includes the electronic document to be signed, the identification information of the signatory for signing, and the address information of the signer's terminal device. The uploaded electronic document is stored and managed by the edit server.

When the upload information is entered into the edit server, the edit server stores the uploaded electronic document and notifies the terminal of the user who should sign that he is requested to sign. The user who receives the notification requests the user authentication to the edit server 7 through the terminal device. If the user authentication is normal, the edit server sends the authentication response to the user's terminal device.

The user checks the electronic document which is the signing target. When signing the checked electronic document, the user requests the generation of the signature object data to the edit server through user's own terminal device. This generation request of the signature object data sent from the terminal device to the edit server has significance as the user's indication of intention to request the signature processing. Then, this generation request acts as a trigger, and a sequence of the signing processing starts automatically.

The edit server edits the electronic document to be signed in response to the receipt of the generation request of the signature object data and generates the signature object data from the electronic document. Then, the edit server downloads the signature object data to the terminal device.

In response to the downloading of the signature object data, the terminal device encrypts the downloaded signature object data and the verification information using the encryption key to create the crypto token.

Subsequently, the terminal device transmits the signature information including the generated crypto token, the signature key identification information and the plaintext verification information to the edit server. Since the signature object data is encrypted, it is never tampered with.

The edit server generates the signing request including the plaintext signature key identification information, the plaintext verification information, and the crypto token including the encrypted signature object data and encrypted verification information. The generated signing request is transmitted to the tamper resistant device.

The search means of the tamper resistant device accesses to the signature key storage section to search the signature key and the decryption key related to the signature identification information. Then, the crypto token included in the signing request is decrypted using the searched decryption key. Then, comparative verification is performed on the plaintext verification information and the decrypted verification information. As the verification result, if two verification information match each other, this signing request is determined to be valid and the decrypted signature object data is digitally signed. The signature result including the generated electronic signature is transmitted to the edit server via the key management server.

The edit server embeds the received electronic signature into the electronic document to create the signed electronic document (signed document). The signed document is stored in the edit server and is transmitted to the terminal device, if necessary,

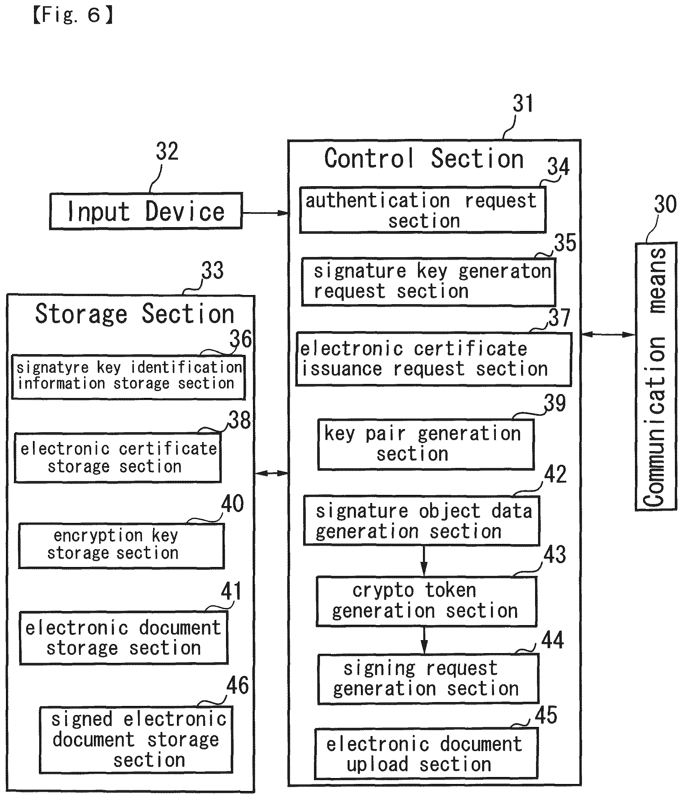

Fig. 6 is a block diagram showing the functional configuration of the terminal device. Fig. 6 shows only the part relating to the electronic signature. The terminal device comprises a communication means 30, a control section 31, an inputting device 32, and a storage section 33. The communication means 30 is connected to the network and performs transmission /reception of data among the key management server and so on. The control section 31 has an authentication request section 34 to transmit the authentication request including the user ID and the password to the key management server and so on. Then, logging into the signing system, a signature key generation request is transmitted to the tamper resistant device from a signature key generation request section 35. The signature key identification information (the public key of the key pair) generated by the tamper resistant device is stored in a signature key storage section 36 of the storage section through the communication means.

An electronic certificate issuance request section 37 generates an electronic certificate issuance request including the public key sent from the tamper resistant device and transmits it to the certificate issuing server. The generated electronic certificate is received via the communication means and is stored in an electronic certificate storage section 38.

A key pair generation section 39 generates the key pair for identity authentication. The generated secret key functions to encrypt the signature object data to be signed and the verification information and is stored in an encryption key storage section 40. And, the public key is encrypted using the public key that is paired with the signature key as the encryption key and is transmitted to the tamper resistant device via the communication means.

Here, the key pair generation section includes not only the means for directly generating the key pair but also a means or function for installing the key pair which is generated externally and is saved in a memory device into the terminal device. For example, the configuration that the externally generated key pair is saved in a storage means such as a USB memory and the saved key pair is installed on a terminal device corresponds to operating the key pair generation means.

The electronic document to be signed is stored in an electronic document storage section 41. When digitally signing, the electronic document is extracted and is transmitted to the signature object data generation section 42. The signature object data generation section generates the signature object data from the electronic document. This signature object data generation section can be configured by a hash operation means, for example.

The generated signature object data is supplied to a crypto token generation section 43. The crypto token generation section 43 generates the crypto token by encrypting the signature object data and the verification information using the encryption key. The generated crypto token is supplied to a signing request generation section 44. The signing request generation section generates the signing request including the signature key identification information, plaintext verification information, the crypto token, and necessary information. The generated signing request is transmitted to the tamper resistant device via the communication means 30. Moreover, when the signature key identification information is used as the verification information, the signing request is generated including the plaintext signature key identification information, the crypto token including the encrypted signature key identification information and the encrypted signature object data, and the necessary information.

An electronic document upload section 45 creates an electronic signature generation request including the electronic document stored in the electronic document storage section 41 and the stored electronic certificate, and transits it to the edit server. Further, with respect to the electronic document that requires the signing of another person, the electronic document to be signed is added with the signer's ID and address and is uploaded to the edit server.

When the digital signing at the tamper resistant device is completed, the electronic signature is sent to the terminal device. The received electronic signature is embedded into the electronic document to generate the signed electronic document. The generated signed electronic document is stored in a signed electronic document storage section 46.

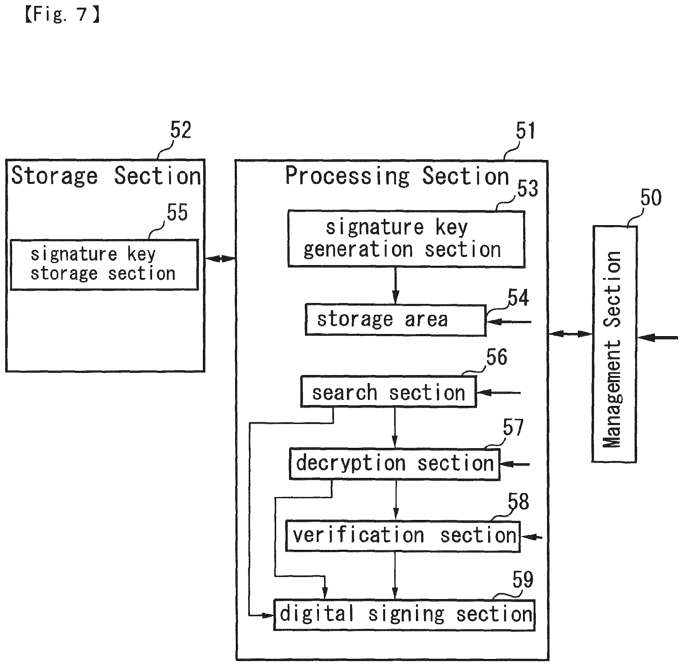

Fig. 7 shows one example of the functional configuration of the tamper resistant device. The tamper resistant device comprises a management section 50, a processing section 51, and a memory section 52. The information signals sent from the terminal devices and the edit server are entered into the management section 50 by way of the network and the key management server. The management section 50 controls each function provided in the processing section so that the specified function is performed based on the inputted information signal.

In response to a reception of the signature key generation request, a signature key generation section 53 is operative to generate the key pair of the secret key acting as the signature key and the public key. The generated key pair is stored in a storage section 54 temporarily. The public key acts as the signature key identification information for identifying the signature key and the decryption key. This public key is duplicated and is transmitted to the corresponding terminal device via the management section.

When the tamper resistant device receives the public key of the key pair used for identity authentication, the received public key is sent to a storage section 54. The storage section stores the received public key in relation to the key pair acting as the signature key to form a signature key information. This signature key information includes the signature key, the signature key identification information, and the decryption key. This signature key information is stored for each signer or user in a signature data memory section 55 provided in the memory section 52.

When the signing request is entered, the signature key identification information included in the signing request is supplied to a search section 56, the crypto token is sent to a decryption section 57, and the verification information is sent to a verification section 58. The search section 56 accesses to the signature key storage section to search the decryption key and the signature key related to the signature key identification information. The searched decryption key is sent to the decryption section 57. The decryption section decrypts the inputted crypto token. The decrypted verification information is sent to the verification section 58.

To the verification section 58, the decrypted verification information and the plaintext verification information are entered. The verification section verifies the matching of the two verification information.

To a signing section 59, the decrypted signature object data and the searched signature key are entered. Then, if the two pieces of the verification information match each other, the decrypted signature object data is digitally signed using the signature key.

If the two pieces of the verification information do not match, the signing request is processed as an error.

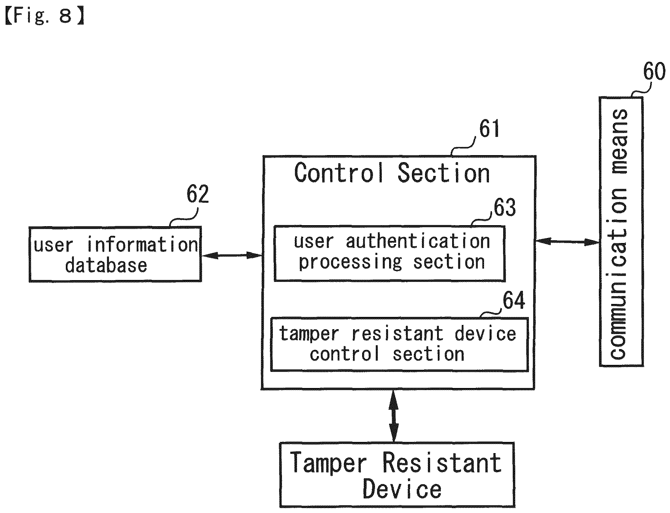

Fig.8 shows the functional configuration of the key management server. The key management server comprises a communication means 60, a control section 61, and a user information database 62. The control section includes a user authentication processing section 63 to process the authentication request from the terminal device.

The signature key generation request sent from the terminal device and the signing request sent from the edit server or the terminal device are supplied to a tamper resistant device control section 64, and the instructions corresponding to the specified processing are sent to the tamper resistant device. Various information such as the electronic signature generated by the tamper resistant device is sent to the terminal device or the edit server by way of a tamper resistant device control section 64. Moreover, the key management server and the tamper resistant device are interconnected via an internal bus or external bus. Alternatively, they can be connected via LAN.

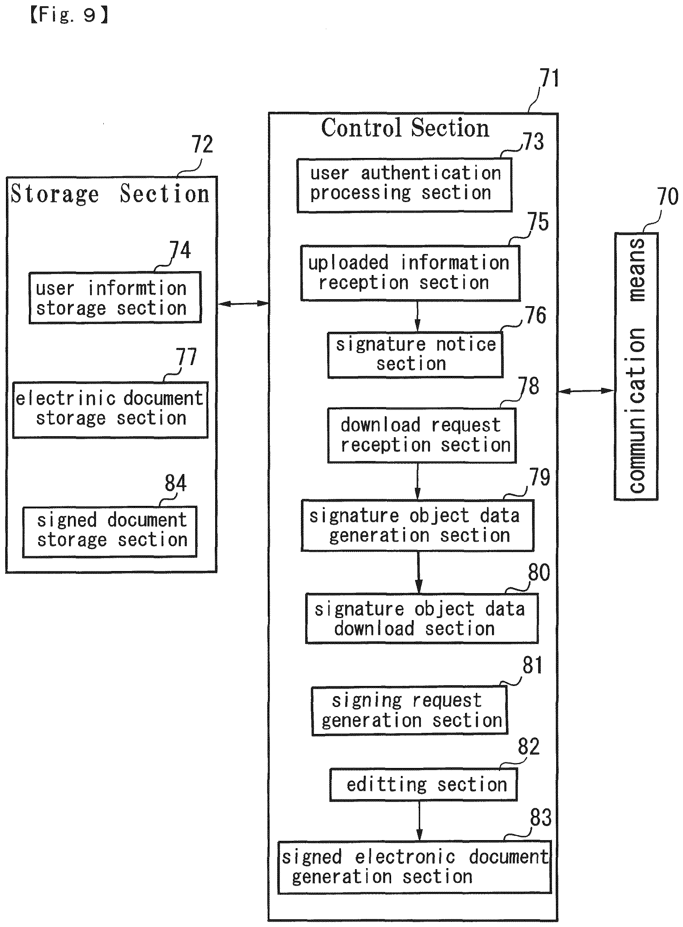

Fig. 9 is a block diagram showing the functional configuration of the edit server. This block diagram corresponds to the algorithm shown in Fig. 4. The edit server comprises a communication means 70, a control section 71 and a memory section 72. The communication means 70 is connected to the network to transmit and receive the information to and from the terminal device and the key management server. A user authentication processing section 73 processes the authentication request sent from the terminal device using the user information stored in a user information storage section 74.

The upload information uploaded from the terminal devices is entered into an upload information reception section 75. The upload information is sent to signature notification section 76, which sends a signature notification to the terminal device at the signer's address included in the upload information, indicating that a signature has been requested. Moreover, the electronic document included in the upload information is stored in an electronic document storage section 77.

The download request of the signature object data from the signer is entered into a download request reception section 78. In response to the inputted download request, a signature object data generation section 79 is activated to generate the signature object data from the electronic document. The generated signature object data is transmitted to the corresponding terminal device from the signature object data download section 80.

The signature information sent from the signer's terminal device is entered into a signing request generation section 81. The signing request generation section generates the signing request including the crypto token included in the signature information, the plaintext signature key identification information and the plaintext verification information. The generated signing request is transmitted to the tamper resistant device.

The edit server comprises an edition section 82. The edition section 82 edits the electronic document to be signed and sets the arranging method or arranging location of the field of the electronic signature which is to be formed.

The electronic signature which is the signing result generated by the tamper resistant device is entered into a signed electronic document generation section 83. The edition information generated by the edition section is also inputted into the signed electronic document generation section, and the electronic signature is embedded onto the electronic document to generate the signed electronic document (signature document). The generated signed electronic document is stored in the signature document storage section 84.

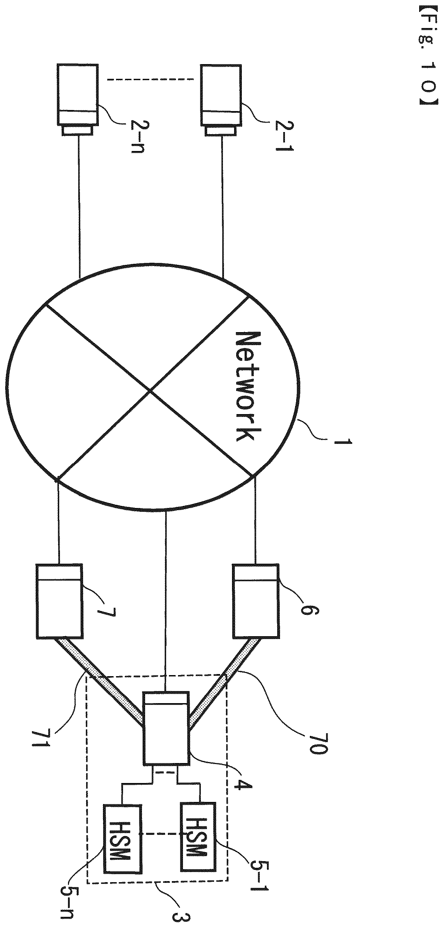

Fig. 10 is a diagram illustrating the modification of the remote signature system according to the invention. In this example, VPN connections 70 and 71 are provided between the key management server 4 and the certificate issuing server 6 and between the key management server 4 and the edit server 7, respectively. By providing the VPN connections, the key management server 4 and the certificate issuing server 6 are equivalent to being directly interconnected and the key management server 4 and the edit server 7 are also equivalent to being directly interconnected. Thereby, safe encrypted transmission lines are built between the certificate issuing server and the key management server and between the edit server and the key management server.

Furthermore, the certificate issuing server 6 and the edit server 7 are constructed by an authentication server with the identity authentication function. The user (terminal device) has an account on the authentication servers (the certificate issuing server 6 and the edit server 7), and exchanges messages with the authentication servers by SSL encrypted communication through the login authentication process. As a result, the transmission lines between the terminal device 2 and the certificate issuing server 6 and between the terminal device 2 and the edit server 7 are protected by SSL encrypted communication.

In the signature key generation step, the public key of the key pair generated by the tamper resistant device is sent to the terminal device by way of the key management server 4, the VPN connection 90 and the certificate issuance server 6. And, the encryption token generated by the terminal device is sent to the tamper resistant device by way of the certificate issuance server 6, the VPN connection 90 and the key management server 4.

Furthermore, in the signing step, the encryption token generated by the terminal device is sent to the tamper resistant device by way of the edit server 7, the VPN connection 91 and the key management server. The electronic signature generated by the tamper resistant device is sent to the edit server 7 by way of the key management server and the VPN connection 91. As the result of this, a safe transmission line is built between the terminal device for giving the signature instruction to the tamper resistant device and the tamper resistant device for digitally signing based on the instruction from the terminal device.

The present invention is not limited to the above-described embodiments, and various modifications and changes can be made. For example, although in the above-mentioned example, the remote signature system comprising the signing system, the edit server, the certificate issuing server, and the terminal devices was described, an independent electronic document management server having a function for managing the electronic document can be used. Namely, the electronic documents uploaded by the terminal devices are entered into the electronic document management server, and those can be managed by the electronic document management sever. Then, the uploaded information is transferred from the electronic document management server to the edit server, and the generation of the signature object data, the generation of signing request, and other processes can be performed on the edit server.

With respect to the signature object data, the data extracted by performing a given logical operation (a hash operation) on the area of the electronic document which is the target for signing can be used as the signature object data.

According to the invention, various forms of the signature key identification information can be used. For instance, the public key paired with the signature key is used as the signature key identification information, this public key can be used to identify the signature key between the terminal device and the tamper resistant device. Alternatively, the code sequence for identifying the signature key is set in advance between the key management server and the tamper resistant device, and the signature key is identified using the set code sequence. **In** this system, the public key is used to identify the signature key between the terminal device and the key management server, and the preset code sequence is used to identify the signature key between the key management server and the tamper resistant device. **In** this case, the key management server includes an identification information conversion means to convert the signature key identification information included in the signing request sent from the terminal device into the corresponding code sequence and to send it to the tamper resistant device. The tamper resistant device identifies the signature key using the converted code sequence.

## Claims

1. A remote signature system comprising a signing system which includes one or more than one tamper resistant devices configured to generate and manage signature keys and a key management server for controlling a tamper resistant device of the one or more than one tamper resistant devices and terminal devices through which users or signers operate, wherein signature object data generated from an electronic document is digitally signed using the signature key, and wherein
said terminal device comprises a means for generating a key pair for authentication comprising a secret key and a public key or a means for installing the key pair for authentication which is generated externally, and a means for encrypting verification information used for identity verification and the signature object data subject to the digital signing using the secret key as an encryption key to generate a crypto token, and wherein
said tamper resistant device comprises a signature key generation means for generating the signature key, a means for storing the generated signature key, a means for storing the public key of the key pair for authentication generated in the terminal device as a decryption key, a signature key storage means for storing signature key information including the signature key, the decryption key and signature key identification information for each user, a means for accessing to the signature key storage means to search the decryption key and signature key which are specified by the signature key identification information, a means for decrypting the encrypted verification information and the encrypted signature object data using the searched decryption key, a verification means for verifying validity of a signing request using the decrypted verification information, and a means for digitally signing the signature object data using the searched signature key, and wherein
the secret key of the key pair for authentication is stored in the terminal device as the encryption key, and the public key of the key pair is transmitted to the tamper resistant device and is stored in the signature key storage means as the decryption key, and wherein
when digitally signing, the terminal device encrypts the signature object data and the verification information using the encryption key to generate a crypto token, and wherein
the signing request including the signature key identification information, the plaintext verification information before being encrypted, and the crypto token including the encrypted verification information and the encrypted signature object data is created and is transmitted to the tamper resistant device, and wherein
the tamper resistant device searches both the decryption key and the signature key together using the signature key identification information included in the signing request, decrypts the crypto token using the searched decryption key, verifies consistency between the decrypted verification information and the plaintext verification information, and digitally signs the decrypted signature object data using the searched signature key, if the decrypted verification information and the plaintext verification information match each other.

2. The remote signature system according to claim1, wherein the signature object data is used as the verification information, the signing request including the signature key identification information, the plaintext signature object data before being encrypted, and the crypto token including the encrypted signature object data is created and transmitted to the tamper resistant device, and wherein
the tamper resistant device decrypts the crypto token using the searched decryption key, verifies consistency between the decrypted signature object data and the plaintext signature object data, and digitally signs the decrypted signature object data using the searched signature key, if they match each other.

3. The remote signature system according to claim 1, wherein either the signature key identification information, data information including the signature key identification information and the signature object data concatenated each other, or arbitrary information conceived by the user is used as the verification information.

4. The remote signature system according to claim 3, wherein the signature key identification information is used as the verification information, and the signing request including the plaintext signature key identification information before being encrypted and the crypto token including the encrypted signature key identification information and the encrypted signature object information is created and transmitted to the tamper resistant device, and wherein
the tamper resistant device verifies consistency between the decrypted signature identification information and the plaintext signature identification information, and digitally signs the decrypted signature object data using the searched signature key, if the decrypted signature identification information and the plaintext signature identification information match each other.

5. The remote signature system according to claim 4, wherein an encrypted hash value which is formed by encrypting the hash value of the signature key identification information is used as the encrypted signature key identification information, and wherein
the tamper resistant device verifies consistency between the hash value formed by performing the hash operation on the plaintext signature key identification information and the decrypted hash value of the signature key identification information.

6. The remote signature system according to claim 3, wherein the data information formed by concatenating the signature object data and the signature identification data is used as the verification information, and the signing request which includes the plaintext data information and the crypto token including the encrypted data information is formed and transmitted to the tamper resistant device, and wherein
the tamper resistant device extracts the signature key identification information from the data information, searches the decryption key and the signature key using the extracted signature identification information, decrypts the crypto token using the searched decryption key, verifies the consistency between the decrypted data information and the plaintext data information, and digitally signs the signature object data included in the decrypted data information, if they match.

7. The remote signature system according to claim 1, wherein the arbitrary information conceived by the user is used as the verification information.

8. The remote signature system according to claim 7, wherein the user inputs the self-conceived verification information into the terminal device for each signing request, and the identity verification is performed using the verification information entered for each signing request.

9. The remote signature system according to claim 1, wherein said terminal device comprises a means for generating the signature object data from the electronic document to be signed, and encrypts the generated signature object data and the verification information to create the crypto token.

10. The remote signature system according to claim 1, wherein the signature key generation means of the tamper resistant device generates a key pair of a secret key and a public key, and the generated secret key is used as the signature key and the generated public key is used as the signature key identification information.

11. The remote signature system according to claim 10, wherein the public key of the key pair for authentication is encrypted using the public key paired with the signature key and is transmitted to the tamper resistant device.

12. The remote signature system according to claim 1, wherein said remote signature system further comprises an edit server for managing the electronic documents to be signed and a certificate issuing server for generating an electronic certificate.

13. The remote signature system according to claim 12, wherein said edit server comprises a means for generating the signature object data from the electronic document.

14. The remote signature system according to claim 1, wherein said tamper resistant device is configured by a Hardware Security Module (HSM) .

15. A tamper resistant device for digitally signing signature object data generated from an electronic document using a signature key, wherein
said tamper resistant device comprises a means for generating the signature key, a means for storing the generated signature key, a means for storing a public key of a key pair for authentication generated in a terminal device as a decryption key, a signature key storage means for storing signature key information including the signature key, the decryption key and signature key identification information for each user, a search means for accessing to the signature key storage means to search the decryption key and the signature key which are specified by the signature key identification information included in a signing request, a means for decrypting the encrypted signature object data and encrypted verification information included in the crypto token included in the signing request using the searched decryption key, a verification means for verifying identity using the decrypted verification information, and a means for digitally signing the signature object data using the searched signature key.

16. The tamper resistant device according to claim 15, wherein when digitally signing, the signing request including the signature key identification information, the plaintext verification information before being encrypted, the crypto token including the encrypted verification information and the encrypted signature object data is entered into the tamper resistant device, and wherein
the tamper resistant device searches the decryption key and the signature key using the signature key identification information included in the signing request, decrypts the crypto token using the searched decryption key, verifies consistency between the decrypted verification information and the plaintext verification information, and digitally signs the signature object data using the searched signature key, if they match each other.

17. The tamper resistant device according to claim 16, wherein the signature object data is used as the verification information, and wherein
when digitally signing, the signing request including the signature key identification information, the plaintext signature object data before being encrypted, and the crypto token including the encrypted signature object data is entered into the tamper resistant device, and wherein
the tamper resistant device verifies the consistency between the decrypted signature object data and the plaintext signature object data, and digitally signs the signature object data using the searched signature key, if they match each other.
